# EUROPEAN PATENT APPLICATION

(11) **EP 3 620 878 A1**
(43) Date of publication of application: **11.03.2020**
(21) Application number: 18793853.5
(22) Date of filing: 20.04.2018
(51) Int. Cl.: G05B 19/418, B62D 65/18, G06Q 50/04

(54) **TRUCK OPERATION SYSTEM AND TRUCK OPERATION METHOD**

(30) Priority: 02.05.2017 JP 2017091673
(71) Applicant: Amada Holdings Co., Ltd., Isehara-shi, Kanagawa 259-1196 (JP)
(72) Inventor: SAEKI, Shuichi, Isehara-shi Kanagawa 259-1196 (JP)
(74) Representative: Grünecker Patent- und Rechtsanwälte PartG mbB
(86) International application number: PCT/JP2018/016335
(87) International publication number: WO 2018/203488

(57) **Abstract**

In a processing factory in which a plurality of processing machines are installed, a cart operation system operates a plurality of carts to carry materials, parts, and products to process. The cart operation system includes a cart operation display device provided for each of the carts, to display a cart operation indication for a worker and a production management device that generates a cart control signal so that a worker may use a proper cart depending on the plurality of processing machines that are working in the processing factory according to processing programs. The production management device sends a cart control signal to the cart operation display device, and according to the cart control signal, the cart operation display device displays a luminous indication so that the worker, by seeing the luminous indication, may use and operate a proper cart.

## Description

### [Technical Field]

The present invention relates to a cart operation system and a cart operation method, and more precisely, to a cart operation system and a cart operation method, capable of providing, according to a cart control signal, a luminous indication of a cart operation display device arranged on each cart so that a worker who sees the luminous indication may efficiently use a proper cart.

### [Background Art]

Generally, a sheet metal factory processes products mainly through steps mentioned below.

(1) Order acceptance (delivery time, quantity, and drawings), (2) production planning (process allocation), (3) processing preparation (material preparation, metal mold preparation, programming, cart operation planning, and the like), (4) blanking (including secondary processing such as deburring), (5) bending, (6) welding (including temporary welding, jig making, and parts fixing), (7) inspection, (8) painting, (9) assembling, and (10) shipping.
In the processes following the above-mentioned (4), various carts are used to place and carry thereon sheet metal materials, parts, and products.

Depending on the scale of a processing factory, there are 50 to 100 carts that are operated according to drawings and work instruction sheets.

### [Prior Art Document]

### [Patent Literature]

Patent Literature 1: Japanese Unexamined Patent Application Publication No. 2013-202667

### [Summary of the Invention]

However, cart operation in such a processing factory mentioned above has a problem that a worker must use various carts according to work instruction sheets (sort destinations), drawings, and the like as a result a work time is elongated and a work efficiency is worsened as mentioned below.

For example, in the above-mentioned blanking process, parts must individually be taken out of sheets stacked on a shelf and must be sorted. For this, the parts must be checked for their shapes according to work instruction sheets and drawings and then must be put on carts. This takes a time and there is a possibility of causing sort errors.

Also, in the bending process, a worker must look for parts processed in the preceding process. At this time, the worker may understand which blanking machine has processed the parts by seeing the work instruction sheets. However, the worker must determine which cart is an objective cart according to the drawings. This takes more time.

Further, in the welding (assembling) process to gather parts and join them together, a large number of parts kinds are involved to increase the number of carts, and therefore, securing a space is difficult and taking out the parts is a hard work.

In addition, to operate a factory as a whole, a production leveling plan achieved by simply distributing production among processing machines increases the number of carts and necessitates wide spaces for passageways and storage for partly-finished products. Also, traffic lines will overlap depending on worker's behaviors to deteriorate a work efficiency. Also, in handling an emergency at an occurrence of a rush item, merging the rush item with a presently planned work will confuse a worker who must operate carts. To cope with this, new processes starting from a material taking task must be prepared. This deteriorates production yield and efficiency.

The present invention is made by taking account of the above-mentioned situations and an object thereof is to provide a cart operation system and a cart operation method, capable of letting a cart operation display device arranged on each cart display a luminous indication according to a cart control signal so that a worker, by seeing the luminous indication, may efficiently use a proper cart.

To resolve the problem mentioned above, a feature of the present invention is that a cart operation system for operating a plurality of carts that carry materials, parts, and products to process in a processing factory installed with a plurality of processing machines comprises a cart operation display device arranged on each of the carts to display a cart operation indication for a worker and a production management device to generate a cart control signal for the worker in order to use a proper cart according to actions of the respective processing machines working on processing programs in the processing factory, wherein the production management device transmits the cart control signal to the cart operation display device, the cart operation display device displays an indication, and the worker, by seeing the indication, uses and operates a proper cart.

Another feature of the present invention is that the cart operation display device has a feedback device for feeding back to the production management device an operation status of the cart on which the cart operation display device is arranged.

Another feature of the present invention is that the feedback device of the cart operation display device has a confirmation switch arranged on the cart operation display device to inform of a completion of loading/unloading of the cart on which the cart operation display device is arranged, the confirmation switch is operated by the worker at the time of completion of loading/unloading to inform of the completion of loading/unloading from the cart operation display device to the production management device.

Another feature of the present invention is that the production management device wirelessly transmits the cart control signal to the cart operation display device.

Another feature of the present invention is that the cart operation display device displays a processing process at which the cart is present in the processing factory.

Another feature of the present invention is that the cart operation display device displays an indication corresponding to the worker to let the worker find the cart to be used by the worker.

Another feature of the present invention is that the cart operation display device displays an indication to indicate at which of the plurality of processing machines in the processing factory the cart is present.

Another feature of the present invention is that the cart operation display device displays an indication corresponding to an emergency to let a worker find the cart to be used for the emergency.

Another feature of the present invention is that the cart operation display device displays an indication corresponding to a delivery time delay to let a worker find the cart to be used for the delivery time delay.

Another feature of the present invention is that the cart operation display device emits different colors or blinks to discriminate indications from one another.

Another feature of the present invention is that the cart operation display device has at least two light emitting parts.

Another feature of the present invention is that the two light emitting parts of the cart operation display device emit different colors or differently blink.

Another feature of the present invention is that the two light emitting parts of the cart operation display device are an upper light emitting part and a lower light emitting part.

Another feature of the present invention is that the upper light emitting part of the cart operation display device displays a blinking indication corresponding to the worker to let the worker to find the cart to be used by the worker and the lower light emitting part displays a process color representing a processing process at which the cart is present.

Another feature of the present invention is that a cart operation method for a cart operation system, which operates a plurality of carts that carry materials, parts, and products to process in a processing factory installed with a plurality of processing machines and comprises a cart operation display device arranged on each of the carts to display a cart operation indication for a worker and a production management device to generate a cart control signal for the worker in order to use a proper cart according to actions of the respective processing machines working on processing programs in the processing factory, comprises a process in which the production management device forms a cart operation plan according to the processing programs for the processing machines and a process in which the production management device transmits the cart control signal to the cart operation display device, wherein according to the cart control signal, the cart operation display device displays a luminous indication, and the worker, by seeing the luminous indication, uses and operates a proper cart.

Another feature of the present invention is that, when the worker operates the cart, the worker feeds back to the production management device an operation status of the cart on which the cart operation display device is arranged.

Another feature of the present invention is that the cart operation method further comprises a process of determining whether or not there is an emergency processing interrupt, and if it is determined that there is the emergency processing interrupt, a process of forming a cart operation plan for the emergency processing interrupt and updating an original cart operation plan by replacing it with the formed cart operation plan.

### [Brief Description of Drawings]

[Fig. 1] Fig. 1 is an overall view showing a cart operation system embodied according to the present invention.
[Fig. 2] Fig. 2 is a schematic diagram showing a cart operation display device 15 attached to a cart 1 in the cart operation system shown in Fig. 1, to display a cart operation indication for a worker.
[Fig. 3] Fig. 3 is an explanatory diagram showing the cart 1 to which the cart operation display device 15 is attached.
[Fig. 4] Fig. 4 is an explanatory diagram showing emission colors of an upper light emitting part 15a and lower light emitting part 15b of the cart operation display device 15.
[Fig. 5] Fig. 5 is a table showing examples of light emission states of the cart operation display device 15 with respect to various statuses (situations).
[Fig. 6] Fig. 6 is a table showing examples of light emission states of the cart operation display device 15 with respect to workers.
[Fig. 7] Fig. 7 is a table showing examples of customer's cart specifications registered as parameters.
[Fig. 8] Fig. 8 is a table showing examples of colors used to choose carts for customers.
[Fig. 9] Fig. 9 is a flowchart showing a cart operation method conducted by a production management device 5, in which (a) is a general flowchart of the cart operation method and (b) is a detailed flowchart of step 103 of (a).
[Fig. 10] Fig. 10 is an explanatory diagram showing, in a cart assigning action, a displaying action for a worker carried out by the cart operation display device 15 under the control of the production management device 5.
[Fig. 11] Fig. 11 is an explanatory diagram showing, in a partly-finished product delivery time managing action, a displaying action for a worker carried out by the cart operation display device 15 under the control of the production management device 5.
[Fig. 12] Fig. 12 is an explanatory diagram showing, in a product searching action, a displaying action for a worker carried out by the cart operation display device 15 under the control of the production management device 5.
[Fig. 13] Fig. 13 is an explanatory diagram showing, in a sort navigating action, a displaying action for a worker carried out by the cart operation display device 15 under the control of the production management device 5.
[Fig. 14] Fig. 14 is an explanatory diagram of a map showing locations of a plurality of carts 1 in a factory.

### [Description of Embodiments]

Hereunder, embodiments of the present invention will be explained with reference to the drawings.

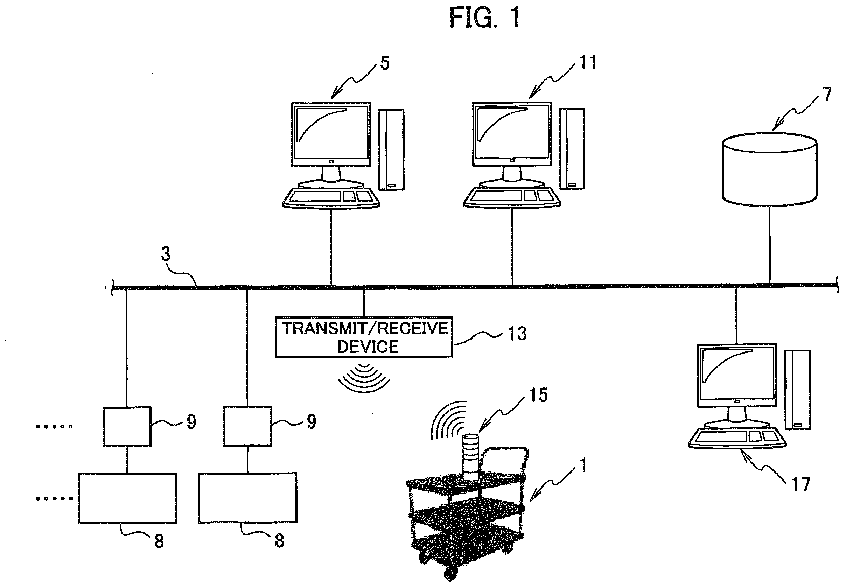

Figure 1 is an overall diagram showing a cart operation system embodied according to the present invention.

This cart operation system is, in a sheet metal factory or the like having a plurality of processing machines, to efficiently operate a plurality of carts 1 on which materials, products, and the like are placed and carried. As shown in Fig. 1, a LAN 3 arranged in the metal sheet factory is connected to a production management device 5 to manage the manufacturing of products from sheet metal materials, a database 7 to store setting information used by the production management device 5 and the like, NC devices 9 of a plurality of processing machines 8 to process sheet metal materials into products, a programming device (CAM) 11 to form processing programs for the processing machines 8, and a transmit/receive device 13 to wirelessly transmit cart control signals formed by the production management device 5 and receive signals from the carts 1. Each of the plurality of carts 1 is provided with a cart operation display device 15 that wirelessly receives the cart control signal from the transmit/receive device 13, and according to the cart control signal, displays a cart operation indication for a worker.

The LAN 3 is also connected to a site terminal 17 arranged in the processing factory.

The production management device 5, programming device 11, site terminal 17, and the like each are a computer having a RAM, ROM, CPU, display, and the like and achieve functions mentioned later by software stored in the ROMs.

According to this embodiment, the processing machines 8 include punch presses, benders, welders, and the like.

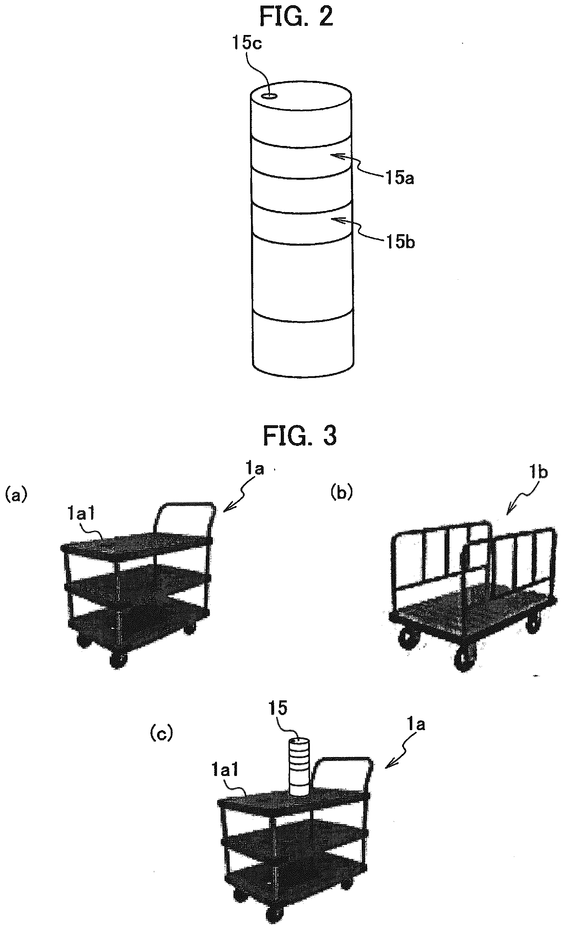

Figure 2 is a schematic diagram showing the cart operation display device 15 attached to the cart 1 in the cart operation system shown in Fig. 1, to display a cart operation indication for a worker.

As shown in Fig. 2, the cart operation display device 15 is formed by a cylindrical mesh-type beacon elongated upward and downward and includes an upper light emitting part 15a, a lower light emitting part 15b, and a confirmation switch 15c at a top part.

The confirmation switch 15c is to inform the production management device 5 of a completion of loading/unloading of the cart 1. A worker pushes the confirmation switch 15c at the time of completion of loading/unloading so that a signal indicating the completion of loading/unloading is transmitted from the cart operation display device 15 to the production management device 5.

The upper light emitting part 15a forms a search section that emits light when a worker searches for the cart or when warning a delivery time delay. The lower light emitting part 15b forms a process description section to indicate the next process and the like at the time of completion of loading/unloading of the cart 1.

The upper light emitting part 15a expresses an emergency level with the number of blinks and indicates a worker or other condition with a color. The lower light emitting part 15b expresses a sorting source cart or a sorting destination cart with the number of blinks and indicates a process with a color.

Here, the process color emitted from the lower light emitting part 15b indicates a processing process where the cart 1 is present in the factory.

An example of typical usage is to make the upper light emitting part 15a blink so that a worker may find a cart to use and make the lower light emitting part 15b emit a process color so that the worker may recognize a processing process of the cart 1.

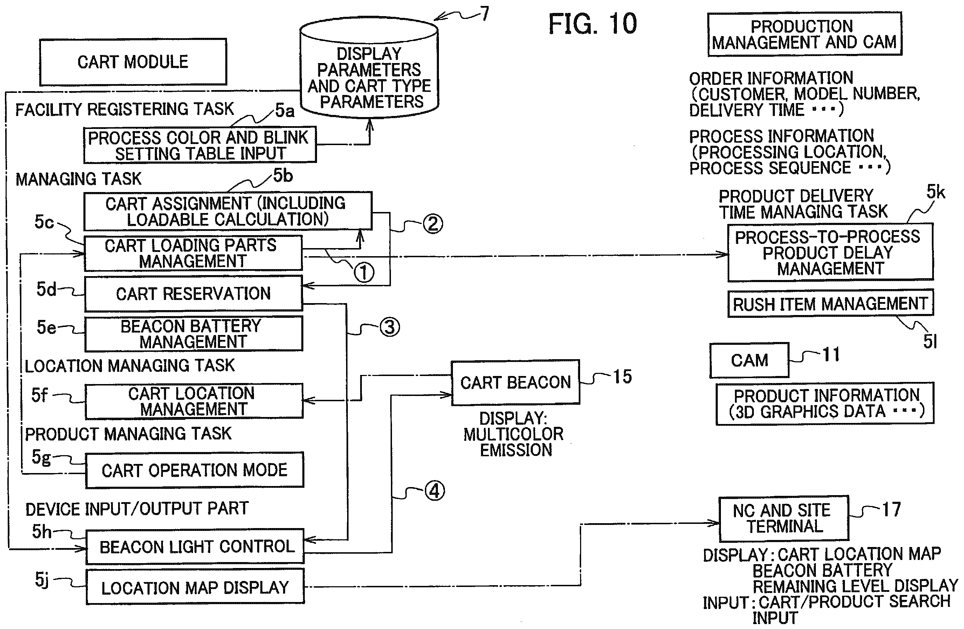

The cart operation display device 15 is driven by a battery installed therein and managed by a beacon battery management 5e (refer to Fig. 10) to be explained later.

The cart operation display device 15 is configured to be attached to a top part of an existing cart 1a or 1b shown in (a) and (b) of Fig. 3. A fitting structure thereof may vary depending on the structure of the existing cart 1. For example, for the cart 1a shown in Fig. 3 (a), a fitting tool for sandwiching an uppermost shelf 1a1 is arranged at a lower end of the cart operation display device 15, and as shown in Fig. 3(c), the fitting tool is used to attach the lower end part of the cart operation display device 15 to the uppermost shelf 1a1 of the cart 1a. Alternatively, a magnet is arranged at the lower end of the cart operation display device 15 to attach, by magnetic force, the device 15 to the uppermost shelf 1a1 of the cart 1a.

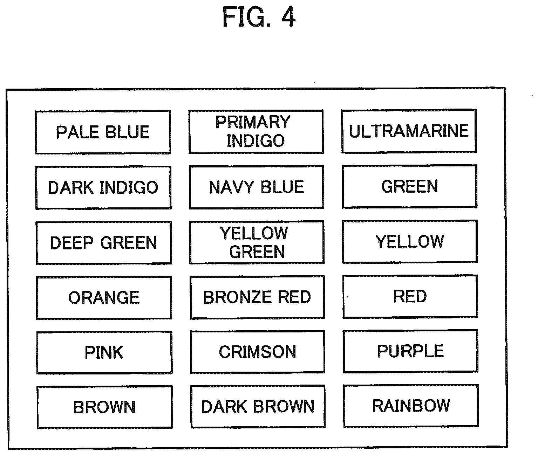

Emission colors of the upper light emitting part 15a and lower light emitting part 15b of the cart operation display device 15 are a plurality of kinds as shown in Fig. 4.

Figure 3 is an explanatory diagram showing the cart 1 to which the cart operation display device 15 is attached and Fig. 4 is an explanatory diagram showing the emission colors of the upper light emitting part 15a and lower light emitting part 15b of the cart operation display device 15.

Next, setting information for the cart operation display device 15 stored in the database 7 and used by the production management device 5 will be explained.

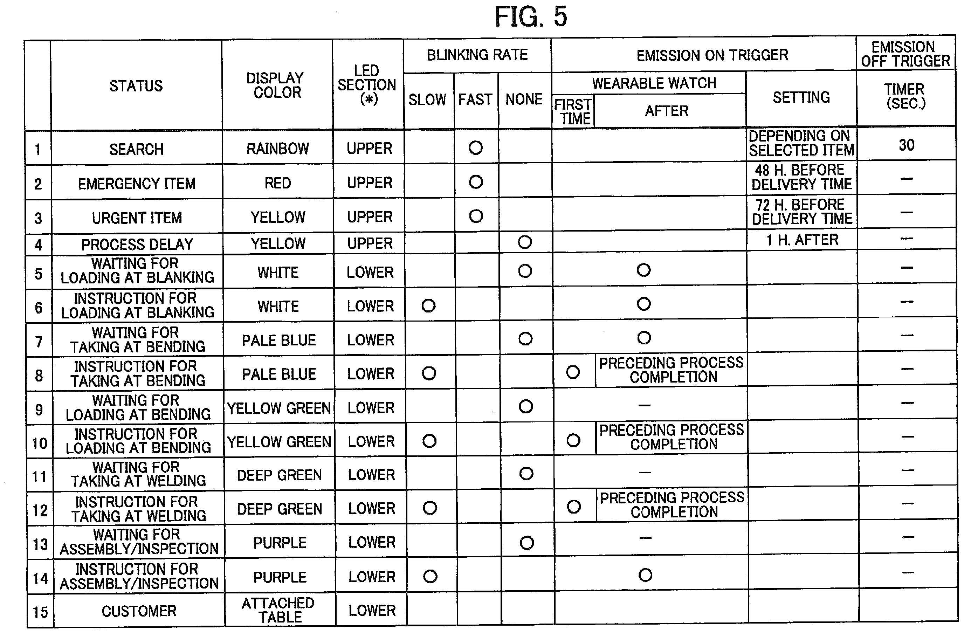

Figure 5 is a table showing examples of light emission states of the cart operation display device 15 with respect to various statuses (situations).

As shown in Fig. 5, in the case of, for example, a search to find out a cart to be used by a worker, it is set such that the search section, i.e., the upper light emitting part 15a of the cart operation display device 15 turns ON for 30 seconds at a fast blinking rate with a rainbow color.

In the examples of process colors shown in Fig. 5 to be emitted from the lower light emitting part 15b of the cart operation display device 15, a pale blue color, for example, from the lower light emitting part 15b indicates a step of waiting or instruction for taking at a bending machine (bender). If the lower light emitting part 15b is deep green, it indicates a step of waiting or instruction for taking at a welder.

Accordingly, when the lower light emitting part 15b of the cart operation display device 15 emits the process color of pale blue and when a bent item is taken out of the bending machine and the worker confirms the completion of loading with the confirmation switch 15c, the lower light emitting part 15b of the cart operation display device 15 changes the process color to, for example, deep green to indicate the step of waiting for taking at the welding machine.

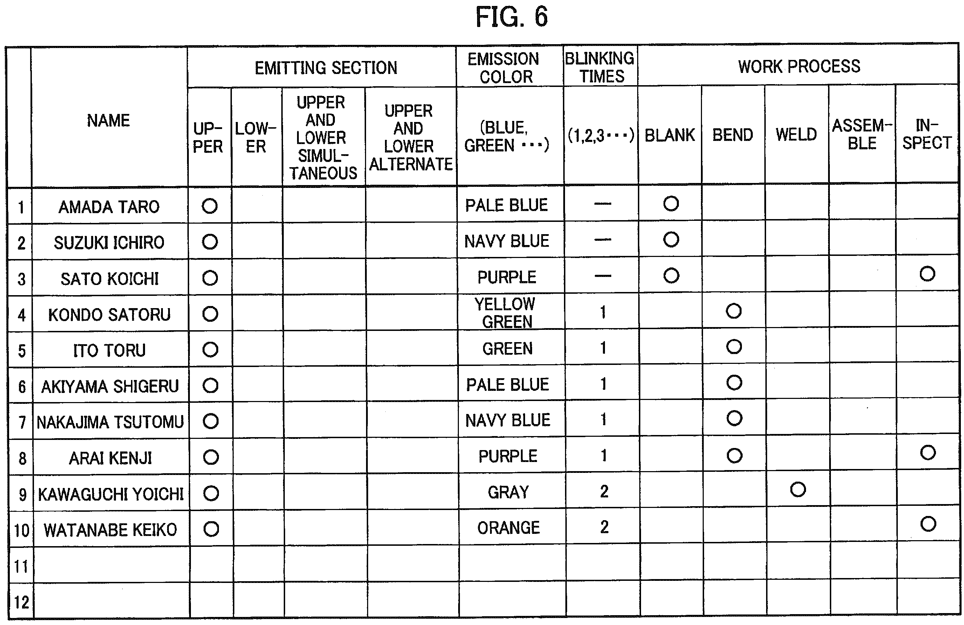

Figure 6 is a table showing examples of light emission states of the cart operation display device 15 with respect to workers.

As shown in Fig. 6, if a worker is, for example, Amada Taro, the upper light emitting part 15a, i.e., the search section of the cart operation display device 15 is set to emit pale blue light without blinking.

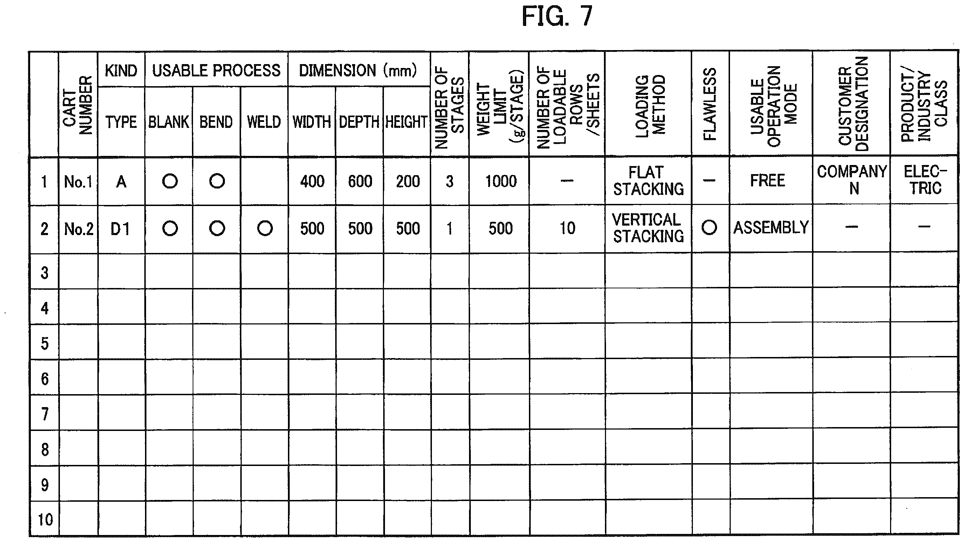

Figure 7 is a table showing examples of customer's cart specifications registered as parameters.

As shown in Fig. 7, a cart with a cart number, for example, No. 1 is set to be of a type A, used for a blanking or bending process, sized as 400 mm in width, 600 mm in depth, and 200 mm in height, three in the number of stages, 1000 g/stage in weight limit, flat stacking in loading method, free in usable mode, Company N in customer designation, and electric in product/industry class.

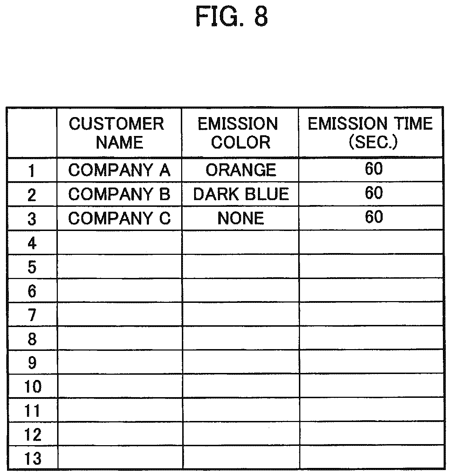

To sort carts according to customers, it is possible to set colors as shown in Fig. 8. Figure 8 is a table showing examples of colors used to choose carts for customers.

In this case, the upper light emitting part 15a of the cart operation display device 15 may indicate a customer and the lower light emitting part 15b a process. Alternatively, the upper light emitting part 15a may indicate an emergency item and the lower light emitting part 15b a process. Also, the upper light emitting part 15a and lower light emitting part 15b may each emit a process color.

The tables set as mentioned above are read by the production management device 5, which generates a cart control signal and transmits the same from the transmit/receive device 13 to the cart operation display device 15. Based on the cart control signal, the cart operation display device 15 provides a luminous indication for a worker.

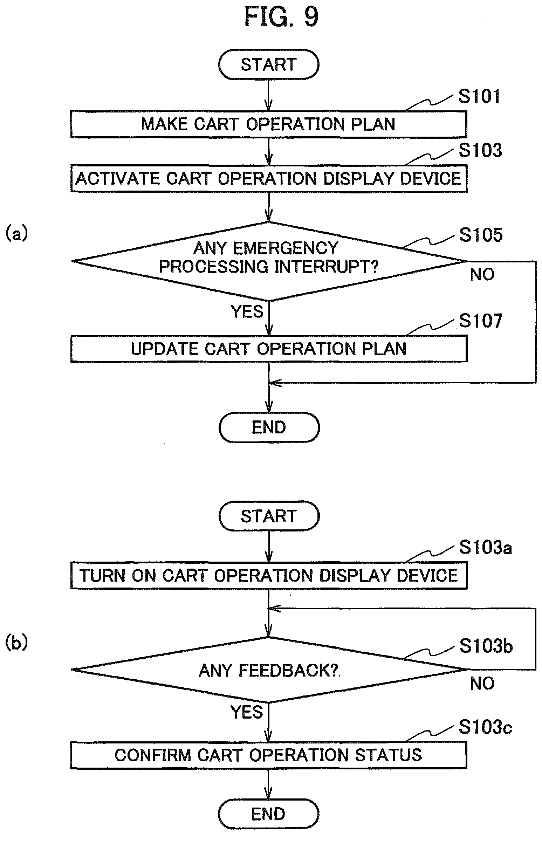

Next, with reference to Fig. 9, a cart operation method conducted by the production management device 5 will be explained.

Figure 9 is a flowchart showing the cart operation method achieved by the production management device 5, in which (a) is a general flowchart of the cart operation method and (b) is a detailed flowchart of step 103 of (a).

First, as a preparatory stage before starting a cart operation, the cart operation display device 15 is attached to each of the plurality of carts 1 in the factory. It is possible to prepare carts 1 to which the cart operation display devices 5 have already been attached.

Here, the cart operation display devices 15 are provided with their own numbers that correspond in a one-to-one manner to the cart numbers of the carts 1. For example, the cart 1 with a number of 1 is provided with the cart operation display device 15 having a number of 1.

Properties (loadable material, quantity, and the like) of each cart 1 are stored in connection with the number of the cart 1, and the production management device 5 refers to the properties of a given cart 1 and forms a cart operation plan explained below.

In step 101 of Fig. 9(a), the production management device 5 forms a cart operation plan according to processing contents of each processing machine 8 (a processing program for each processing machine 8) in the factory.

Namely, the production management device 5 reads a processing program of each processing machine 8 from the programming device (CAM) 11 and forms a cart operation plan including cart assignment, delivery time management, product search, sort, and the like for each of the blanking process, bending process, welding process, and the like.

When forming the cart operation plan, the production management device 5 obtains the location of each cart 1, calculates a loadable quantity of each cart 1, and by adjusting to a processing action of each processing machine 8 instructed by the processing program, determines the operation plan for each cart 1. Namely, the operation plan for each cart 1 is formed by finding carts 1 of a required kind according to the processing action of each processing machine 8 and by assigning to a worker an optimum one of the carts that is in the vicinity of the processing machine 8.

The operation plans formed by the production management device 5 are once stored in the database 7.

Next, in step 103, in an actual processing work, a displaying operation for a worker by the cart operation display device 15 is carried out under the control of the production management device 5 according to the operation plan for the cart 1.

Namely, in the actual processing work, the production management device 5 reads from the database 7 the operation plans determined in the above-mentioned step 101, and according to the operation plans, forms a cart control signal for each cart 1. The cart control signals are transmitted from the transmit/receive device 13 to the cart operation display devices 15. According to the cart control signals, the cart operation display devices 15 conduct luminous indications for workers.

With reference to Fig. 9(b), the details of the above-mentioned step 103 will be explained.

In step 103a of Fig. 9(b), according to the cart control signal from the production management device 5, the cart operation display device 15 provides a luminous indication for a worker.

Next, in step 103b, the worker operates the cart according to the luminous indication of the cart operation display device 15, and at this time, it is determined whether or not the cart operation display device 15 has sent a loading/unloading completion signal to the production management device 5 (whether or not there is a feedback).

Namely, for example, it is determined whether or not there is a feedback that the worker finds out, according to the luminous indication of the cart operation display device 15, the cart 1 to use, loads the cart 1 with a material, product, or the like, and pushes the confirmation switch 15c of the cart operation display device 15 to send a loading completion signal to the production management device 5.

Similarly, for example, it is determined whether or not there is a feedback that the worker unloads a material, product, or the like from the cart 1 used by the worker and pushes the confirmation switch 15c of the cart operation display device 15 to send an unloading completion signal from the cart operation display device 15 to the production management device 5.

If the above-mentioned step 103b determines that there is a feedback, the production management device 5 confirms, based on the feedback, an operation condition of the cart 1, in the step 103c.

Namely, for example, if it is determined that there is a feedback that the worker has unloaded the material, product, or the like from the cart 1 used by the worker and has pushed the confirmation switch 15c of the cart operation display device 15 to send an unloading completion signal from the cart operation display device 15 to the production management device 5, the production management device 5 confirms, according to the feedback, a vacant state of the cart 1 and shifts the cart 1 from the present process (preceding process) to the next process (following process).

In this way, the feedback from a worker enables to quickly confirm a discrepancy between a plan and a practice at a site. Adjusting to site conditions that change every moment enables the carts that have completed preceding processes to be successively transferred to the next processes.

In the above-mentioned embodiment, the cart operation display device 15 is provided with only one confirmation switch 15c, which is used to inform of loading/unloading completion. Instead, confirmation switches may separately be arranged for the loading completion and unloading completion.

Further, although the above-mentioned embodiment informs of the loading/unloading completion of the cart 1, it is possible to inform only of the loading completion of the cart 1.

Figure 10 is an explanatory diagram showing a displaying action for a worker carried out by the cart operation display device 15 under the control of the production management device 5 in a cart assigning action in a blanking process, bending process, welding process, and the like.

In Figs. 10 to 13, a process color and blink setting table input 5a, a cart assignment 5b, a cart loading parts management 5c, a cart reservation 5d, a beacon battery management 5e, a cart location management 5f, a cart operation mode 5g, a beacon light control 5h, a location map display 5j, a process-to-process product delay management 5k, and a rush item management 51 are functional blocks realized by software in the production management device 5.

As shown in Fig. 10, in a cart assigning action, the cart loading parts management 5c sends, according to the cart operation mode 5g, a cart assigning instruction to the cart assignment 5b, which sends a cart reserving instruction to the cart reservation 5d. Next, the cart reservation 5d sends a light instruction to the beacon light control 5h. Lastly, the beacon light control 5h sends an emission ON instruction to the cart beacon (cart operation display device) 15, and according to the emission ON instruction, the cart beacon (cart operation display device) 15 emits light.

Here, in the case of the action settings of the table shown in Fig. 5, a search in the cart assigning action to find out a cart to be used by a worker is achieved such that the search section, i.e., the upper light emitting part 15a of the cart operation display device 15 of the cart 1 to be used by the worker is turned ON to emit a rainbow color at a fast blinking rate for 30 seconds.

Therefore, in the cart assigning action, the worker is able to quickly find out the cart 1 to use.

Further, in the case of the action settings of the table shown in Fig. 6, a worker, for example, Amada Taro in the cart assigning action is specified such that the search section, i.e., the upper light emitting part 15a of the cart operation display device 15 is turned ON to emit a pale blue color without blinking.

Accordingly, the worker Amada Taro is able to quickly find out the cart 1 of his own.

Also, in the case of the table shown in Fig. 7, a cart provided with the number of No. 1 is set to be of a type A, used for a blanking or bending process, sized as 400 mm in width, 600 mm in depth, and 200 mm in height, three in the number of stages, 1000 g/stage in weight limit, flat stacking in stacking method, free in usable mode, Company N in customer designation, and electric in product/industry class. These cart parameters are referred to in the cart assigning action by the cart loading parts management 5c working under the cart operation mode 5g, so that the cart assignment 5b may assign a proper cart.

As a result, a proper cart is assignable according to the cart parameters.

Also, in the case of the customer settings of the table shown in Fig. 8, the cart search for, for example, Company A is achieved such that the cart operation display device 15 is turned ON to emit an orange color for 60 seconds.

As a result, a worker is able to easily find out the cart 1 of the customer.

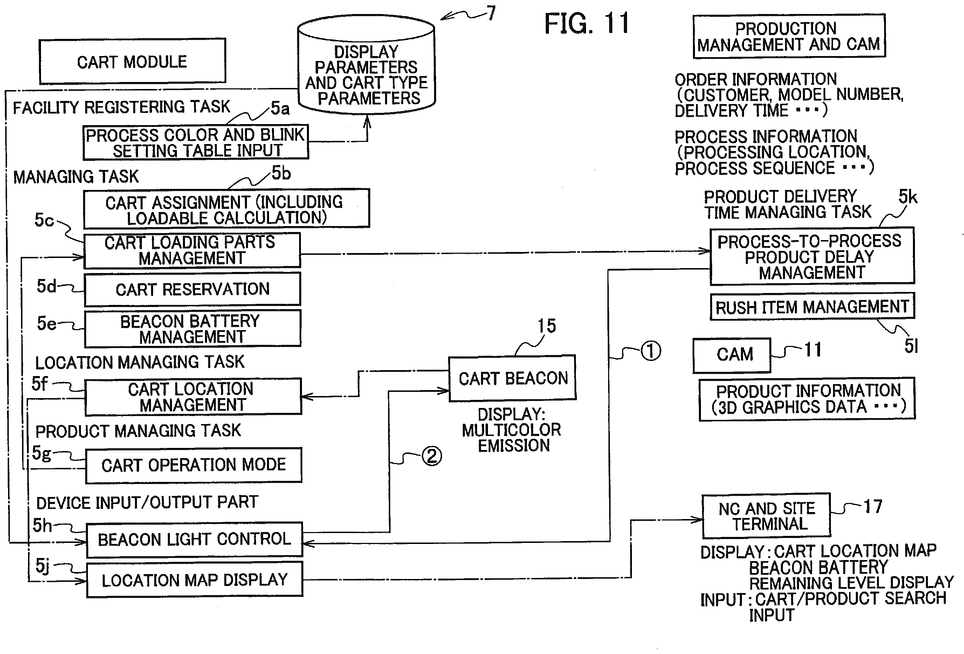

Next, in a partly-finished product delivery time managing action shown in Fig. 11, the process-to-process product delay management 5k sends a light instruction to the beacon light control 5h, the beacon light control 5h sends an emission ON instruction to the cart beacon (cart operation display device) 15, and according to the emission ON instruction, the cart beacon (cart operation display device) 15 turns ON to emit light.

Figure 11 is an explanatory diagram showing, in the partly-finished product delivery time managing action, a displaying action for a worker carried out by the cart operation display device 15 under the control of the production management device 5.

Here, in the case of the action settings of the table shown in Fig. 5, if an emergency item whose delivery time is 48 hours occurs in the cart assigning action, the search section, i.e., the upper light emitting part 15a of the cart operation display device 15 of a cart 1 to be used by a worker is turned ON to emit a red color at a fast blinking rate.

Accordingly, in the cart assigning action, the worker is able to quickly recognize the cart of the emergency item and take an action for the emergency item.

Also, in the case of the action settings of the table shown in Fig. 5, if there is a one-hour process delay in the cart assigning action, the search section, i.e., the upper light emitting part 15a of the cart operation display device 15 of a cart 1 to be used by a worker is turned ON to emit a yellow color.

Accordingly, in the cart assigning action, the worker is able to quickly recognize the one-hour process delay and take an action for the process delay.

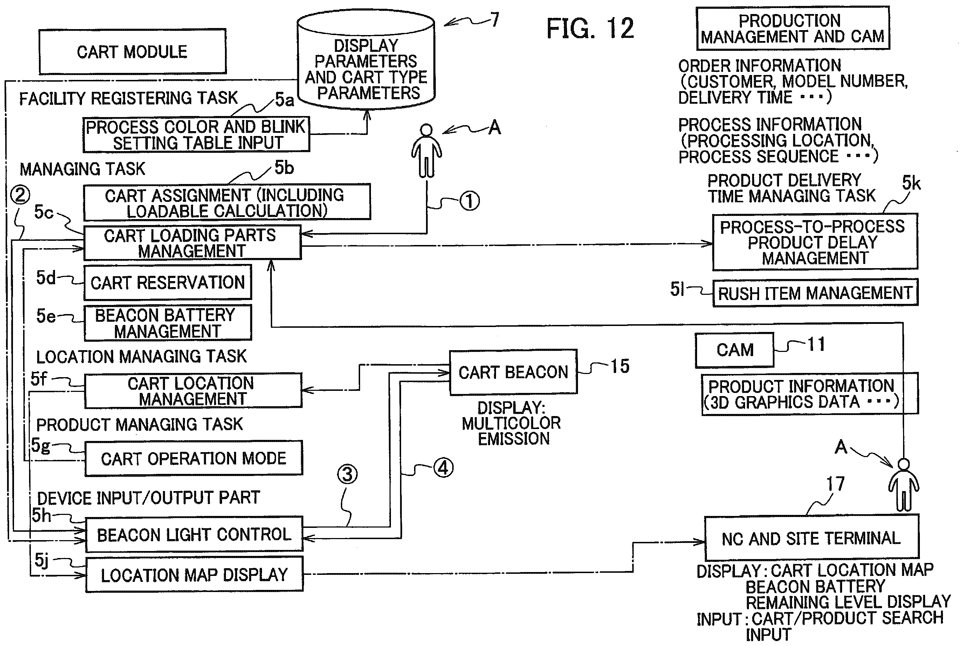

Next, in a product searching action shown in Fig. 12, a worker A issues a product search instruction. In response to the instruction, the cart loading parts management 5c sends a light instruction to the beacon light control 5h, the beacon light control 5h sends an emission ON instruction to the cart beacon (cart operation display device) 15, and according to the emission ON instruction, the cart beacon (cart operation display device) 15 is turned ON to emit light and send a search completion signal to the beacon light control 5h.

Figure 12 is an explanatory diagram showing, in the product searching action, the displaying action for a worker carried out by the cart operation display device 15 under the control of the production management device 5.

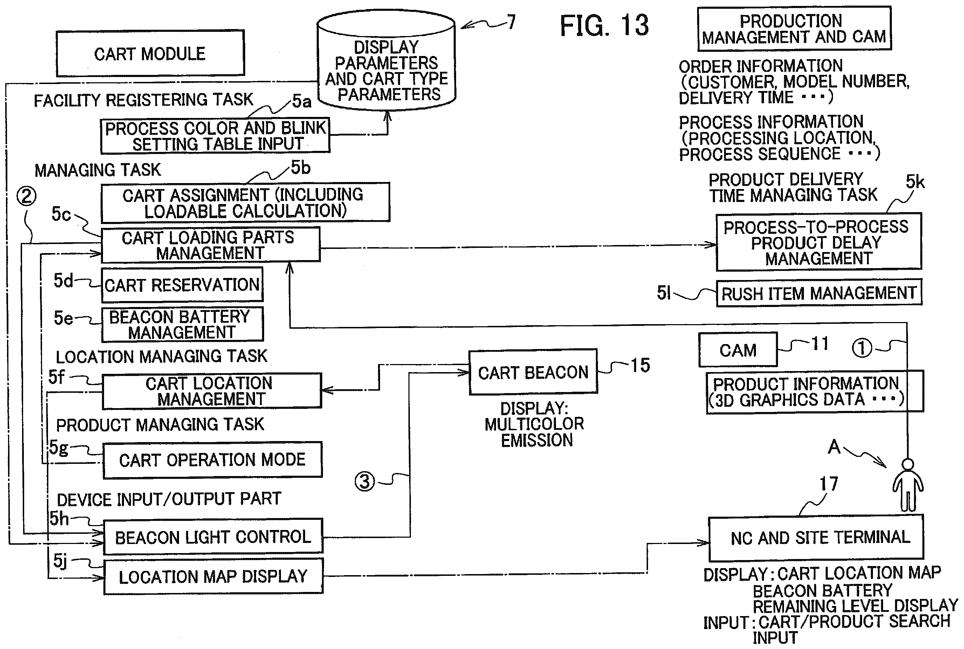

Next, in a sort navigating action shown in Fig. 13, the worker A issues a sort navigation instruction. In response to the instruction, the cart loading parts management 5c sends a light instruction to the beacon light control 5h, the beacon light control 5h sends an emission ON instruction to the cart beacon (cart operation display device) 15, and according to the emission ON instruction, the cart beacon (cart operation display device) 15 is turned ON to emit light.

Figure 13 is an explanatory diagram showing, in the sort navigating action, a displaying action for a worker carried out by the cart operation display device 15 under the control of the production management device 5.

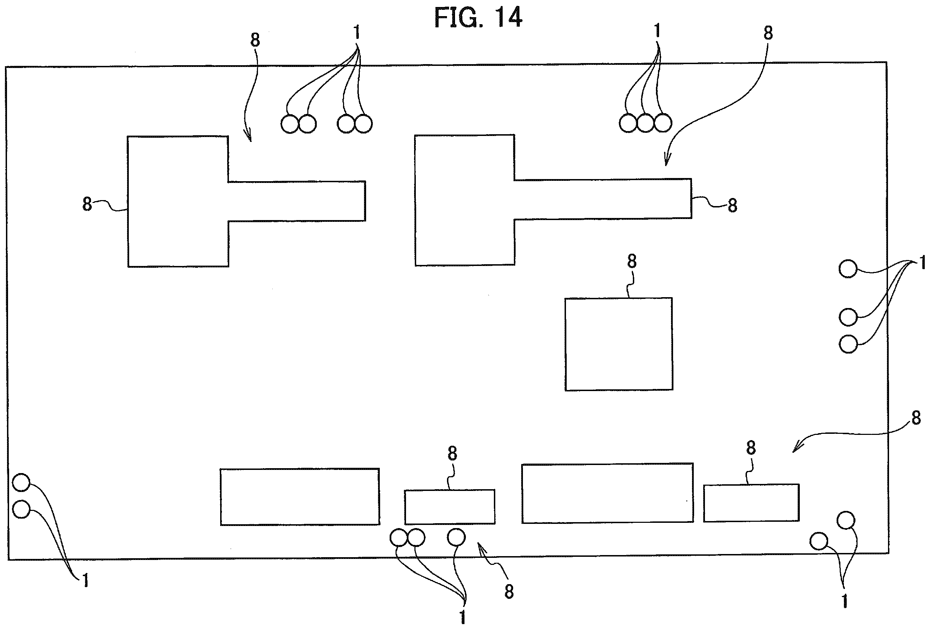

In the above-mentioned cart assigning action, partly-finished product delivery time managing action, product searching action, and sort navigating action, the cart location management 5f instructs the location map display 5j so that the NC 9 or the site terminal 17 may display a map as shown in Fig. 14 to show locations of the carts 1.

Here, the carts 1 shown on the map may be colored or blinked to clarify the characteristics of the carts 1.

Then, workers are able to refer to the map showing the locations of the carts 1 and operate the carts 1.

Next, returning to Fig. 9(a), in step 105, the production management device 5 determines whether or not there is an emergency processing interrupt.

Namely, if a worker inputs an emergency processing interrupt into the NC device 9 of the processing machine 8 or the like, the production management device 5 recognizes the emergency processing interrupt.

If the above-mentioned step 105 determines that there is an emergency processing interrupt, the programming device (CAM) 11 updates the processing program for the processing machine 8, and in step 107, the production management device 5 forms a cart operation plan taking the emergency processing interrupt into account and replaces the original cart operation plan with the newly formed one, thereby updating the cart operation plan.

Figure 14 is an explanatory diagram of the map showing locations of the carts 1 in the factory.

According to this embodiment, in a processing factory in which a plurality of processing machines are installed, a plurality of carts to carry materials, parts, and products to process are operated by providing each cart with the cart operation display device that displays a cart operation indication for a worker and by sending a cart control signal to the cart operation display device so that the worker may use a proper cart according to the working status of each processing machine. In response to the cart control signal, the cart operation display device displays a luminous indication and the worker, by seeing the luminous indication, is able to efficiently use and operate the proper cart.

The present invention is not limited to the above-mentioned embodiments. The present invention can be embodied in other forms through proper modifications.

### [Industrial Applicability]

According to the present invention, the cart operation display device provided for each cart displays a luminous indication according to a cart control signal, and therefore, a worker, by seeing the luminous indication, is able to efficiently use and operate a proper cart.

## Claims

1. A cart operation system for operating a plurality of carts that carry materials, parts, and products to process in a processing factory installed with a plurality of processing machines, comprising;
a cart operation display device arranged on each of the carts to display a cart operation indication for a worker, and
a production management device for generating a cart control signal for the worker in order to use a proper cart according to actions of the respective processing machines working on processing programs in the processing factory,
wherein the production management device transmits the cart control signal to the cart operation display device,
the cart operation display device displays an indication, and
the worker, by seeing the indication, uses and operates a proper cart.

2. The cart operation system according to claim 1, wherein the cart operation display device has a feedback device for feeding back to the production management device an operation status of the cart on which the cart operation display device is arranged.

3. The cart operation system according to claim 2, wherein the feedback device of the cart operation display device has a confirmation switch arranged on the cart operation display device to inform of a completion of loading/unloading of the cart on which the cart operation display device is arranged, the confirmation switch is operated by the worker at the time of completion of loading/unloading to inform of the comp letion of loading/unloading from the cart operation display device to the production management device.

4. The cart operation system according to claim 1, wherein the production management device wirelessly transmits the cart control signal to the cart operation display device.

5. The cart operation system according to claim 1, wherein the cart operation display device displays a processing process at which the cart is present in the processing factory.

6. The cart operation system according to claim 1, wherein the cart operation display device displays an indication corresponding to the worker to let the worker find the cart to be used by the worker.

7. The cart operation system according to claim 1, wherein the cart operation display device displays an indication to indicate at which of the plurality of processing machines in the processing factory the cart is present.

8. The cart operation system according to claim 1, wherein the cart operation display device displays an indication corresponding to an emergency to let a worker find the cart to be used for the emergency.

9. The cart operation system according to claim 1, wherein the cart operation display device displays an indication corresponding to a delivery time delay to let a worker find the cart to be used for the delivery time delay.

10. The cart operation system according to claim 1, wherein the cart operation display device emits different colors or blinks to discriminate indications from one another.

11. The cart operation system according to claim 1, wherein the cart operation display device has at least two light emitting parts.

12. The cart operation system according to claim 11, wherein the two light emitting parts of the cart operation display device emit different colors or differently blink.

13. The cart operation system according to claim 11, wherein the two light emitting parts of the cart operation display device are an upper light emitting part and a lower light emitting part.

14. The cart operation system according to claim 13, wherein the upper light emitting part of the cart operation display device displays a blinking indication corresponding to the worker to let the worker to find the cart to be used by the worker and the lower light emitting part displays a process color representing a processing process at which the cart is present.

15. A cart operation method for a cart operation system, which operates a plurality of carts that carry materials, parts, and products to process in a processing factory installed with a plurality of processing machines and comprises a cart operation display device arranged on each of the carts to display a cart operation indication for a worker and a production management device to generate a cart control signal for the worker in order to use a proper cart according to actions of the respective processing machines working on processing programs in the processing factory, comprises;
a process in which the production management device forms a cart operation plan according to the processing programs for the processing machines, and
a process in which the production management device transmits the cart control signal to the cart operation display device,
wherein according to the cart control signal, the cart operation display device displays a luminous indication, and
the worker, by seeing the luminous indication, uses and operates a proper cart.

16. The cart operation method according to claim 15, wherein when the worker operates the cart, the worker feeds back to the production management device an operation status of the cart on which the cart operation display device is arranged.

17. The cart operation method according to claim 15, wherein the cart operation method further comprises a process of determining whether or not there is an emergency processing interrupt, and if it is determined that there is the emergency processing interrupt, a process of forming a cart operation plan for the emergency processing interrupt and updating an original cart operation plan by replacing it with the formed cart operation plan.
